# EUROPEAN PATENT APPLICATION

(11) **EP 3 678 345 A1**
(43) Date of publication of application: **08.07.2020**
(21) Application number: 19150012.3
(22) Date of filing: 02.01.2019
(51) Int. Cl.: H04L 29/06, G06F 21/88, G06F 21/73

(54) **ANTI-THEFT OF A NETWORK EQUIPMENT OR PART THEREOF**

(71) Applicant: Nokia Solutions and Networks Oy, 02610 Espoo (FI)
(72) Inventor: Padmanabhan, Sowrirajan, 600096 Chennai (IN); Pauwels, Bart Joseph, 2018 Antwerpen (BE)
(74) Representative: MERH-IP Matias Erny Reichl Hoffmann Patentanwälte PartG mbB

(57) **Abstract**

Methods and control apparatuses are described for operating a network component deployed in a network environment. The method may comprise a step of obtaining a network environment identifier for the network environment. Once the network environment identifier is obtained successfully from the network environment, the method may further comprises a step of comparing the obtained network environment identifier with a reference network environment identifier. The reference network environment identifier may be stored in a non-volatile storage. The non-volatile storage may be comprised within the network component. In particular, if it is determined that the obtained network environment identifier does not correspond with the reference network environment identifier, the method may comprise a step of denying operation of the network component in the network environment.

## Description

### Technical Field

The present document in general relates to a method for operating a network equipment and de-activating the network equipment or a component of it upon detection of a non-correspondence between an obtained identifier or signature with a stored reference and a control unit for performing the operation method.

### Background

Normally, network equipment (e.g., communication network equipment, fixed network equipment, etc.) of the same type is being sold to different public network operators. Recently, it has been discovered that such equipment or components thereof is being removed physically, from Printed Board Assemblies (PBAs) or other Field Replaceable Units (FRUs) up to complete shelves. Such FRU can for example be a battery, a fan pack, etc.

Once a network operator has a legitimately acquired (purchased, leased) installation of a particular type of equipment, sometimes it cannot be easily prevented that additional equipment of the same type (or components thereof), which however has not been acquired through legitimate channels, is installed and maintained in the same manner.

The problem is how to avoid the situation that a given network equipment, or a component thereof (e.g. a FRU), not acquired in a legitimate way, can become operational in an operator's network. In other words, how to make sure that an equipment or a component therein is actually used in the network environment for which it is intended.

Conventional approaches that might be applied for checking the legal compatibility of a given network node equipment, or component plugged into the equipment, are typically based on the use of an external network server for authentication, during the activation time. In particular, the external network server may either be a server controlled by the operator that owns the network, or a server controlled by the vendor of the equipment. However, availability and reachability of the server, and/or legitimacy of such server may not always be guaranteed.

### Summary

In view of some or all of the above problems, the present disclosure generally proposes an operating means for checking the legal compatibility of a network equipment or a component thereof and if necessary deactivating such illegitimate network equipment or component. Generally speaking, this is achieved by a network component determining by itself whether the network component can be allowed to be active in the network environment that it is deployed in (e.g., based on information that is typically difficult to falsify), without relying on information (directly) provided by an untrusted third party.

In general, in order to determine whether the relationship between two items of equipment is legal or illegal, it is helpful to identify both items relative to one another, namely to determine what is the identification of the equipment or component, and/or to determine which is/are the relevant ID(s) of network(s) or network node(s) therein, that this particular equipment or component should be used in, etc.

As a broad aspect, there is provided a method for operating a network component deployed in a network environment. The network component is an individual replaceable element and may for example be an FRU or a PBA (e.g., a fan, a battery, a line card, etc.) that interconnects in some way with (e.g., being plugged into, controlling, being controlled by, etc.) an network equipment or a network node. The network environment may be a physical environment, for instance, an FRU (e.g., a controller card) that is (directly) plugged into an equipment (e.g., a chassis); or an operational network environment, for instance, data flows of a communication network. Broadly speaking, the proposed method applies to any type of component (e.g., an FRU) that can be physically removed and re-installed independently, in a relatively simple way. For instance, such component may refer to single boxes, shelves in a rack, boards in such shelves, fan packs, managed power, cooling and synchronization units, pluggable active line termination devices (electrical or optical), etc.

The method may comprise a step of obtaining a network environment identifier, which can represent a verifiable identity of a network environment, having a low or possibly no ambiguity. It is to be noted that the applied network environment identifier does not have to be absolutely unique. It should also be noted that the network environment identifier does not need to be a generally recognized well-known or even standardized single (unique) identification element for networks. It is sufficient that there is only a low probability that the same identifier could be found also in other networks, to make theft not rewarding. The obtained network environment identifier may also be referred to as a first network environment identifier.

In some examples, the step of obtaining the network environment identifier may be performed by the network component itself. By performing this step by the network component itself, it means that the network environment identifier is not directly provided (or derived from information provided) by an untrusted network operator or server that may falsify the identifier or information. In some examples, the step of obtaining the network environment identifier may be performed by another network component which manages said deployed network component in a same network node assembly, independently from other managed network components in the network. In other words, the network environment identifier may be obtained by another component which manages said deployed network component in the same network node assembly, and said identifier is determined (obtained) for example by observation of network activities and information available in said network node assembly, without requesting such identifier from a device or function outside of said network node assembly. The network node assembly or simply "assembly" generally refers to a combination of boards, FRUs that need each other in order to operate as intended and deliver a useful service. Typically such combination forms together a single network node. In this sense, the network node assembly may also be simply referred to as a network equipment or a network node.

It is important to note that the network environment identifier is not requested from an external entity such as a network authentication server which may not be reliable. Rather, the network component itself or a trusted component which manages said deployed network component obtains the network environment identifier by direct observation/monitoring of the network environment or detection of environment properties. This process is independent of availability and reliability of an external server and cannot be spoofed by the external server providing e.g. false activation codes or identification keys.

In some examples, the step of obtaining the network environment identifier may comprise monitoring network traffic for determining the network environment identifier. The network traffic may for example comprise management traffic, relayed control traffic, relayed subscriber traffic, etc. Thus, this monitoring may involve analysis of link identification and/or network addresses used for own management traffic, relayed control traffic, and relayed subscriber traffic, and subsequent extraction of the identity of the network, from the detected structure and scope of network client and server addresses, or higher layer identities.

In some examples, the obtained network environment identifier from monitoring the network traffic may comprise one of an IEEE 802.3 Ethernet MAC address, an IETF IPv4/v6 address, an identifier related to an operator's network supporting infrastructure, etc.

In some examples, the step of obtaining the network environment identifier may comprise monitoring an immediate (physical) environment of the network component. In this case, the obtained network environment identifier from monitoring the immediate network environment may comprise a unique identifier of the immediate environment. The immediate environment may be a peer network component. For instance, the immediate equipment in which an FRU is plugged into for power-up may be monitored. That is to say, the FRU may check the identity of a equipment that it is plugged into, or of other FRUs (components) that it is controlled by, or that it controls. In this case, the unique identifier may be a unique identity of a peer component. Using an identity specific to the immediate (physical) network environment in which an FRU is plugged into for power-up has an apparent advantage of simplicity.

It is to be noted that identification/obtaining of the network identifier does not have to happen in real-time. In some examples, it is possible that the monitoring of the network traffic and/or the immediate network environment is performed by a background task of the component's management/control unit, during a limited time window, e.g., after the start-up/initialization process. Such background task in general has a lower priority for execution compared to those tasks in the foreground. It is therefore also acceptable that the extraction and analysis of the network identification may take some time, i.e., not happen in real-time.

The method may also comprise a step of comparing the obtained network environment identifier with a reference network environment identifier stored in a non-volatile storage. The stored network environment identifier may also be referred to as a second network environment identifier. Further, this (second) network environment identifier may also be referred to as a reference network environment identifier.

In some examples, the non-volatile memory is comprised within the network component. In other words, the network component itself may comprise the non-volatile memory for storing the (second/reference) network environment identifier. In embodiments, the non-volatile memory is an integral part of the network component or is fixed to the network component so that it cannot be easily removed and replaced so that, when the network component is moved to another deployment, the non-volatile memory must stay with the network component. Thus, also the reference network environment identifier stored in the non-volatile storage is maintained and unchanged, unless modified or removed by a controlled and legitimate management action.

In some examples, the reference network environment identifier may be pre-configured in the network component at manufacturing time. In this case, the reference network environment identifier of the network component is typically unchanged during its life time. In some other examples, the reference network environment identifier may be stored in the non-volatile storage at the first initialization process of the network component. In this case, the reference network environment identifier may for example be learnt by the network component itself from the network environment during the very first initialization process.

In some examples, a same (stored) reference network environment identifier is used for all of the network components that are deployed in the same network environment. However, the reference network environment identifier itself does not have to be one-to-one related to (any one of) the network component's own unique identity. In some other examples, an individually unique network environment identifier may be used for each of the network components deployed in the network environment.

In some examples, the stored network environment identifier may be encrypted. For instance, the encryption may be applied for protection against reverse engineering, or copying of the network environment identifier. Further, in some cases, the encrypted network environment identifier(s) can be made to be unique per network component, for example by including a unique identity of the network component in the encryption process. In this case, for comparing the obtained network environment identifier with the stored (encrypted) network environment identifier, a corresponding decryption process may need to be applied (e.g., for example by using the network component's own unique identity) before the actual comparison can be performed. Alternatively, it is also possible that the obtained network environment identifier can be encrypted first (e.g., by using the same encryption key and algorithm as the reference network environment identifier) such that the comparison does not have to be performed on network identifiers in clear text (i.e., unencrypted). Alternatively, other means may be employed to prevent manipulation or spoofing of the stored network environment identifier.

In some examples, the unique identity of the network component (i.e., the network component's own unique identity) may comprise one of an Equipment Serial Number (ESN), a Communication Serial Number (CSN), a DHCP Unique Identifier (DUID), or an Initial Device Identifier (IDevID), etc.

The method may further comprise a step of denying operation of the network component in the network environment if the obtained network environment identifier does not correspond with the reference network environment identifier. In non-limiting examples, the non-correspondence may refer to, depending on circumstances, cases when the obtained network environment identifier and the stored network environment identifier are not identical, or the obtained network environment identifier is not compliant with the stored network environment identifier, etc. In some cases, more than one (reference) network environment identifiers may be stored in the non-volatile storage and used for the step of comparison. In this case, the plurality of network environment identifiers may form an exhaustive comparison list, or define a range of acceptance whose boundaries are defined by the network environment identifiers. Correspondingly, the non-correspondence may also refer to, but not limited to, cases that the obtained network environment identifier does not match with any of the stored network environment identifiers, or the obtained network environment identifier is not within the range defined (or bounded) by the stored network environment identifiers, etc.

The denial of the operation of the detected (illegal) network component may comprise (temporary) suspension of the corresponding (illegal) network component, or shut-down of the corresponding (illegal) network component. In some cases, not only the detected (illegal) network component is suspended or shut down, the other (normal) network components that control or are controlled by the (illegal) network component may be shut down for security reasons, up to the whole network system.

In some examples, the step of denying operation of the network component in the network environment may be triggered at a random time after the detected non-correspondence. For instance, the deactivation (e.g., suspension or shut-down) of the illegal network component does not have to be applied immediately upon a non-correspondence is detected, but at a random time after the detection. This kind of randomness may be beneficial as in some cases frequent yet random failures after activation may be even worse than well timed (or predictable) failures in terms of key performance indicators (KPIs) like Quality of Experience (QoE) for the network service customers.

The method may further comprise, prior to the step of denying operation of the network component in the network environment, storing information about the detected non-correspondence in the network component and refusing the network component to start-up again, until a manual power-up intervention is executed. Additionally or alternatively, the information about the detected non-correspondence in the network component may be sent (e.g., in terms of a report, a notification, an error message, etc.) to an external server (e.g., a logging or management server of the network operator or equipment vendor). Such information can then be used for purposes of tracing and/or debugging so that proper operations can be carried out accordingly.

It must be noted that the entire method may be performed by the network component itself, or by another network component which manages said deployed network component in a same network node assembly. In the latter case, the another network component acts as a control element for the deployed network component and controls if the network component is allowed to operate in the current network environment.

In some cases, the terms "network component" and "network equipment" may refer to the same network entity, e.g. if the network equipment comprises only a single component, or if deployment of an entire network equipment in a new network environment is considered. In these cases, the disclosed method equally applies to network equipment as well. That is, the network equipment obtains the network environment identifier, checks the obtained network environment identifier with a stored reference network environment identifier, and determines whether to suspend operation of the network equipment based upon the result of the checking step.

As another broad aspect, there is provided a control unit for controlling a network component deployed in a network environment. The control unit may be configured to obtain a network environment identifier for the network environment. The control unit may be further configured to compare the obtained network environment identifier with a reference network environment identifiers stored in a non-volatile memory. The non-volatile memory may be comprised within the network component. That is to say, the network component itself may contain the non-volatile memory. If the obtained network environment identifier does not correspond with the stored reference network environment identifiers, the control unit may be further configured to cause suspension of operation of the network component in the network environment if the obtained network environment identifier does not correspond with the stored reference network environment identifiers.

In some examples, the control unit may be comprised within the to-be-operated network component itself or is comprised within another network component as (or forms) part of a larger standalone unit (e.g., a network node assembly) of the network environment.

Implementations of the disclosed apparatus may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed devices can be implemented as a method, as the skilled person will appreciate.

Other and further embodiments of the present invention will become apparent during the course of the following discussion and by reference to the accompanying drawings.

### Brief Description of the Figures

Embodiments of the disclosure are explained below in an exemplary manner with reference to the accompanying drawings, wherein
Figure 1 shows an exemplary flow diagram for a generic activation procedure based on checking a network environment identifier according to an embodiment of the present invention.
Figure 2 shows an exemplary flow diagram for a comparison step according to an embodiment of the present invention.
Figure 3 shows an exemplary network system according to an embodiment of the present invention.

### Detailed Description

The proposed method can be used for operating a network component deployed in a network environment. The network component can be embodied for example as an FRU being part of a network equipment/node. The FRU (e.g., a fan or a battery pack) may be plugged into the equipment, or be controlled by the equipment in some manner. In some cases, if a FRU (e.g., a controller card of a chassis) comprises a control unit of some kind (e.g., a processor) and a non-volatile memory, the FRU can also be considered as an equipment in circumstances.

In particular, the proposed method includes that the equipment itself determines during activation of the equipment, or activation of an FRU plugged into the equipment, whether the equipment itself, or the new FRU plugged in it, can be allowed to be active in the network environment that it is deployed in. It does so by checking whether a detected network environment identifier (or signature) is compatible with a reference network environment identifier (or signature) stored in the equipment or FRU. In other words, the network environment identifiers and the related activation validation, are not derived from information provided by an untrusted network operator or server (e.g., by a third party provider), yet determined by the equipment or FRU itself from parameters that can hardly be falsified without disturbing the network operation itself.

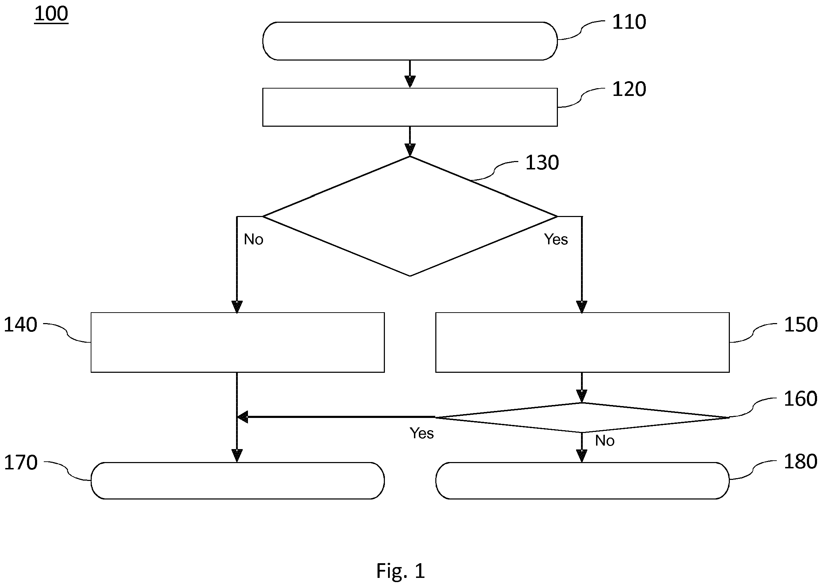

Fig. 1 shows as an example of a flow diagram for a method employing the principle of the present disclosure. In particular, Fig. 1 shows an example of a generic activation procedure based on checking a network environment identifier.

The method 100 may begin with a step 110 of initializing an equipment or an FRU of the equipment. In some cases, this initialization may be a start-up process of the equipment from the power-down state. In some other cases, this initialization may refer to plugging the (new) FRU into the equipment.

After the initialization step 110, the method 100 may continue with a step 120 of obtaining (detecting) a network environment identifier. For the purpose of differentiating with the other identifier(s), this obtained network environment identifier may be referred to as a first network environment identifier.

In principle, this (first) network environment identifier detected/obtained from the network environment should:
- uniquely characterize the network environment;
- not be delivered or checked by a dedicated network identification server;
- be determined during, or in a limited time window or operation after the initialization; and
- be able to be determined independently by the equipment, or FRU therein.

Further, the detected network environment identifier or signature can be invariable to the equipment or FRU. That is to say, before the equipment or FRU can be possibly re-deployed in another network environment, a reset or modification in the factory is required. In some other cases, the obtained network environment identifier can be possibly reset by a logged operator action such that a re-deployment in another network environment is made possible. This option may allow for legitimate migration to another network or to a different network configuration without intervention by the equipment vendor.

Depending on circumstances (e.g., the network environment), the following options may exist for the nature of network environment identifier. In one option, the network (management) traffic is monitored for determining a unique network identifier, during or in a limited time window after start-up process. This may involve analysis of link identification and/or network addresses used for, for example, own management traffic, relayed control traffic, and relayed subscriber traffic, etc., and subsequent extraction of the identity of the network, from, for example, the detected structure and scope of network client and server addresses, or higher layer identities. This option may also be referred to as detection (obtaining) of a unique network based identifier. In another option, the immediate equipment environment in which the network component is deployed in monitored. The immediate environment may be a peer network component. For instance, the immediate equipment environment in which an FRU is plugged into for power-up may be monitored. In this case, the FRU can check and obtain the identity of the peer equipment that it is plugged into, or of other FRUs that it is controlled by, or that it controls. Using an identity specific to the immediate equipment environment in which an FRU is plugged into for power-up, has the advantage of simplicity, yet does not work for chassis, shelves or small non-pluggable stand-alone equipment with no identifiable peer or higher layer hardware. Correspondingly, this option may also be referred to detection (obtaining) of a unique equipment based identifier.

Referring to the detection of the unique network based identifier, state-of-the-art (data) communication networks are generally based on the use of IEEE 802.3 Ethernet as OSI data link layer (L2) and data plane network layer in smaller network domains (L2+), and IETF IPv4/v6 as the management, control and data plane network layer.

In particular, an IEEE 802.3 Ethernet MAC address which is based on a unique 6 octet identifier can either be public or private. A public MAC address generally refers to the address that is world-wide unique, hard coded into the equipment or FRU, assigned exclusively by the vendor, and independent of the network. However, the address is quasi random, without network topology related structure, and must be learned in each network anew. Hence it only allows identification of individual network equipment items (components) that have such address, but it does not allow identification of a larger part of, or of the whole network in any way. On the other hand, a private MAC address refers to the address that is only local network-wide unique, soft coded into the equipment or FRU, assigned exclusively by the network operator, and independent of the vendor. This network address may be structured according the network topology, but it is not unique. In other words, many (different) networks may coincidentally use the same address range, resulting in some (distinct) network components coincidentally use the same address.

Another possibility may be an IETF IPv4/v6 address which is based on a 4 octet or 16 octet identifier and is always assigned by the network operator. Similar as the MAC address, the IP address can also be public or private. A public IP address refers to the address that is world-wide unique, assigned in structured blocks (or with subnet masks) of variable size to organizations, in particular to network operators. Moreover, public IP addresses may be used to manage network equipment, and to reach IPv4 based sub-nets where Network Address Translation (NAT) allows for connection of local network domains, in which addressing happens via Ethernet, or private IPv4 addresses. While for IPv6, the available addressing range is so huge that NAT and private IP addressing are in principle not necessary. Still, currently IPv6 addresses are often translated while support of IPv6 in access and end-user equipment is not so widespread yet. On the other hand, a private IP address generally refers to the address that is only local network-wide unique. Typically, private IP addresses are used behind a NAT server. Moreover, private IP addresses are hardly used for IPv6 based networks.

At a world-wide scale, the IPv4/6 addresses that used as source and destination identifications are unique and structured, in order to allow for forwarding of data traffic without huge forwarding tables to be searched. This implies that these addresses contain and allow (for detecting and obtaining) an identification/identifier of the part of the world-wide public network in which they are used, for instance, a network operator network, a part there-of, or a (larger) enterprise network, etc.

Extraction of this IP based network identity from packets received for equipment management, protocol control or data transport, and corresponding analysis of the IP addresses assigned to the own equipment, allows an equipment or FRU to (uniquely) identify the network which it is used/deployed in. In particular, the analysis may comprise determination of the IP address range and sub-net masking applied for traffic addressed to the equipment/FRU, or even passing through the equipment/FRU (e.g., in access networks).

Furthermore, identification of the network may also be based not directly on IP addresses for any traffic passing by, but on identifiers indirectly related to the legitimate operator's network supporting infrastructure. This kind of indirect identification of the network may be based for example on the analysis of server IDs for NTP server, DNS server, DHCP server, PTP Grandmaster, authentication servers, etc. However, these are relatively easier to mimic or to falsify in a rogue network in which the mis-appropriated equipment or FRU is deployed.

In some cases, even the lack of detecting specific server activity that is normally required in the legitimate target network (e.g., a network signature) after a predetermined time can also be used as a trigger for equipment or FRU de-activation.

Of course, the equipment may also be used in private IPv4 networks, which would then somehow eliminate the advantage of checking against a unique public network ID. Yet even then there is a variety of IP address ranges that may be applied in such (private) networks. However, it is noted that typically equipment theft is a phenomenon striking larger operators who use legitimate public IP addressing for network management. Also, IPv4 is generally fading out in favor of IPv6, where use of private IP addresses is generally not a necessity anymore.

Referring to the detection of the unique equipment based identifier, this basically implies that each equipment and FRU plugged therein has one or more unique identifiers stored in a non-volatile memory. Depending on configurations, the non-volatile memory may be comprised within the equipment or the FRU. The unique identifiers may be, but not limited to, vendor Identifier, vendor specific Serial Number (SN), vendor specific public Local Network Address (e.g. a hard-coded IEEE 802.3 Ethernet Address, and/or an ITU-T G.984 ONU Serial Number), or a combination thereof.

Correspondingly in this case, the admissibility of a new FRU in a deployed equipment can be checked against either or both of the unique identity of the higher level equipment (e.g., chassis, shelf or controller board), when available; and/or a unique signature composed in some manner of multiple unique identities of peer or sub-ordinate FRUs in the equipment.

It is to be noted that identification of the network identifier does not have to happen in real-time, e.g., in the fast data path. It is also acceptable that the equipment or FRU snoops random passing data packets, or packets of particular control protocols for analysis of the applied addressing or identifiers, by a background task by the equipment/FRU management unit, during a limited time window. It is therefore also acceptable that the extraction and analysis of the network identification may take some time, i.e., not happen in real-time.

Once the network environment identifier is obtained from the network environment, the method 100 may proceed to check whether the obtained network environment corresponds with a reference network environment identifier stored in the non-volatile memory. Referring back to the obtained (first) network environment identifier, this reference network environment identifier may also be referred to as a second network environment identifier.

The applicable reference network environment identifier(s) can be either a) pre-configured in the equipment or FRU at manufacturing time in an encrypted way in non-volatile memory of the equipment or FRU which allows for protecting equipment already from time of leaving the factory; or b) learned at a first initialization on-site and be loaded (e.g., in an encrypted way) into non-volatile memory of the equipment or FRU, and be checked only upon a next initialization. The latter option b) allows for flexible deployment, but only starts protection after a first successful deployment. In other words, this way of working (i.e., option b)) avoids the need for personalizing equipment and FRU(s) per destination network at manufacturing time, yet bears the risk of mis-appropriation before the first power-up occurs.

Thus, the method 100 may comprise a step 130 of checking whether a reference network environment is already stored in the non-volatile storage.

Depending on circumstances, for instance in the case of the very first initialization process of the above mentioned option b), the reference network identifier is not yet available in the memory, the method may then proceed to a step 140 where the network environment identifier detected/obtained in the step 120 is stored in the non-volatile memory. In this way, the obtained network identifier may serve as the reference network environment identifier in the next run.

Once the detected network identifier is successfully stored as the reference network environment identifier in the step 140, the method 100 may generally end at a step 170 where the equipment proceeds with its operation or the operation of the (new) FRU.

While in some other cases when the reference network identifier(s) is/are already available and stored in the non-volatile memory, the method 100 may proceed to (instead of the step 140) a step 150 where the network environment identifier obtained in the step 120 is compared with the stored reference network environment. In other words, once a network identity has been determined (e.g., in the step 120), the equipment or FRU can autonomously decide whether it is intended to operate in the detected network environment, based on one or more reference identities of the admissible networks which are either stored in the memory at or after manufacturing time.

In particular, a same reference network identity (signature) can be used for checking admissibility of all equipment or FRUs in the network. Notably, the network identity (signature) itself does not have to be one-to-one related to the own unique identification of the equipment or FRU.

Moreover, for protection against for example reverse engineering or copying of the reference network identifier from correctly deployed equipment or FRUs, the reference network environment identifier can be encrypted. In particular, in order to make the encrypted reference unique per equipment or FRU (for even higher safety), a unique identity of the equipment or FRU can be utilized in the encryption process (algorithm). In other words, a list of one or more reference network environment identifiers can be encoded (encrypted) by an encryption algorithm for example embedded in the software code of the equipment/FRU, which also includes the unique Identification of the equipment/FRU, in order to avoid copying the list of identifiers of admissible networks from one equipment/FRU to the other.

In a non-exhaustive list, such unique identity of the equipment or FRU can be:
- Equipment Serial Number (ESN), which uniquely identifies the system or FRU itself and consists of an equipment vendor unique prefix and a serial number part;
- Communication Serial Number (CSN), which uniquely identifies the Hardware network interface used by the equipment or FRU through the system, to communicate with the network, and consists of an equipment vendor unique prefix, and a network address number part comprising both or either:
   ∘ IEEE 802.3 Ethernet MAC address,
   ∘ ITU-T G.984 ONU Serial Number;
- DHCP Unique Identifier (DUID) as defined in RFC 3315, which is based on a Communication Serial Number (CSN);
- Initial Device Identifier (IDevID), which is the Secure Device Identifier based on IEEE 802.1AR and is installed on the equipment/FRU by the manufacturer.

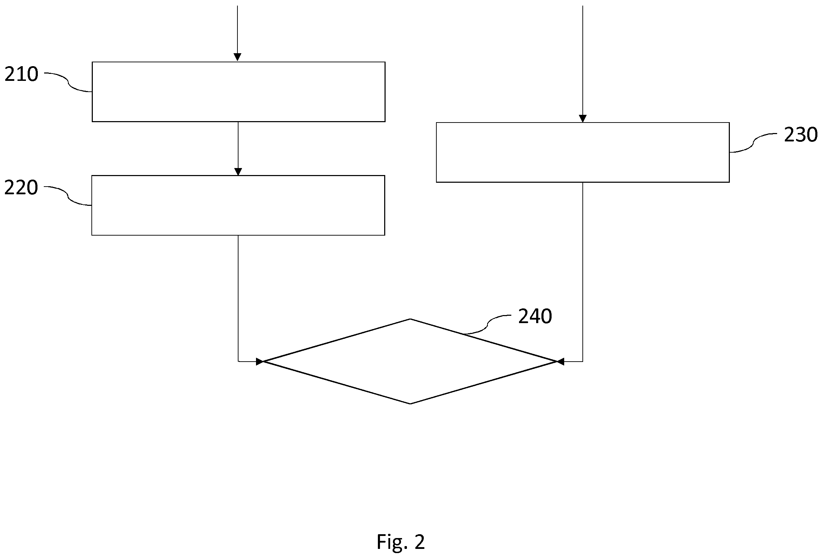

Fig. 2 shows an example of a comparison step with encryption/decryption processes in more detail. In this example, in particular during a very first initialization process of an equipment or FRU of which the reference network identifier is not pre-configured at manufacturing time, the step 140 of storing the detected network environment identifier as shown in Fig. 1 may further comprise a sub-step 210 wherein the detected network environment identifier is encrypted before being stored, as mentioned above.

Thus, in the subsequent operation processes (e.g., during a second start-up process after being deployed to a same or new network environment), after the network environment identifier is obtained (e.g., in the step 120 as shown in Fig. 1), a similar encryption process may be applied to the obtained network environment identifier in a step 230. The encryption process may use the same encryption algorithm as done in step 210, and use the same unique identification of the equipment/FRU (e.g., as the encryption key for the encryption algorithm). In this way, the subsequent comparison step 240 (corresponding to the step 150 as shown in Fig. 1) can be performed on identifiers (both the obtained network environment identifier and the stored reference network environment identifier) in the encrypted form. Alternatively, it is also possible that, instead of performing the encryption step 230, a corresponding decryption step 220 (e.g., a reversed process of the encryption) is performed on the encrypted reference network environment identifier of the step 210. Consequently, the comparison step 240 is performed on identifiers that are in clear text. It is apparent that only one of the steps 220 and 230 is needed to be performed for the comparison step to be successfully carried out, and that the other one can be omitted accordingly.

Encrypting the observed/obtained identification is generally safer. However, when using an encryption algorithm that is not a bijection, it is not easy to discover what the value of the observed network identifier should be for obtaining a match, even when designing an inverse algorithm to the encryption algorithm, and applying that to the stored encrypted reference network identifier, i.e. even when the value of the latter reference identifier and the operation of the encryption algorithm could be determined by reverse engineering. In case reverse engineering can be ruled out, the difference is irrelevant.

Nevertheless, the encryption itself, per se, is not mandatory. The reason is that the newly deployed network component determines itself (or by a proxy) by mere observation what the network environment identifier is, and then compares it to the reference identifier that it has stored. So even if the reference identifier is stored in clear text, there is generally nothing an untrusted third party can do to enforce acceptation of the newly deployed networked component, provided that the untrusted third party cannot influence (falsify) the observation process, nor spoof the observed information items (network environment identifiers) such that they match with the clear text reference identifier.

Of course, the encryption would be able to serve the purpose of enhancing the latter situation as mentioned above: obscuring which network related information is actually being observed for matching to a reference stored in the component, by making a direct comparison with probable candidate items impossible.

Thus, it is noted that the encryption should be interpreted in a broad manner here, not just as an algorithmic transformation of a single network related identification element, possibly using a secret algorithm, and a key that is unique for the deployed network component. It could also consist of e.g., a combination of two or more packet addresses applicable to network equipment or subnets, or two or more peer equipment IDs, by means of any algorithm.

Once the comparison between the detected network environment identifier and the stored reference network environment identifier in the step 150, a decision has to be taken in a step 160, as to whether the detected network environment identifier corresponds with the stored reference network environment identifier or not.

Depending on circumstances, different criteria may be applied for determining whether or not the detected network environment identifier corresponds with the stored reference network. For instance, the correspondence may refer to cases when the obtained network environment identifier and the stored network environment identifier are identical, or the obtained network environment identifier is compliant with the stored network environment identifier (by a predetermined rule), or within the range that is defined by the network environment identifier(s) in some manners, etc.

If it is determined that the detected network environment identifier corresponds with the stored reference network environment identifier, the method 100 may proceed to the step 170 as mentioned above where the equipment proceeds with its (normal) operation or the operation of the (new) FRU and the method 100 in principle ends at this point.

Otherwise, if it is determined that the detected network environment identifier does not correspond with the stored reference network environment identifier, the method 100 may proceed correspondingly to a step 180 where basically the operation of the equipment or FRU in the equipment is deactivated/stopped. This deactivation may comprise suspension or shut-down of the non-correspondent equipment or FRU, or in some cases even up to the entire network system. That is to say, the equipment or FRU may simply stop operating after failure to match the determined network environment identity or signature to the reference list in its non-volatile storage, and require a manual power-up intervention before re-initializing and checking a detected network environment identity or signature once more.

Additionally, if operation in a network environment in which the equipment or FRU is not admissible is detected, this event may be logged in the non-volatile storage, and subsequent reinitialization in any network environment may be disabled until an admissibility reset operation is executed. Or the equipment/FRU may simply shut down without attempt to restart until a manual power cycle is applied. That is to say, the equipment/FRU may store the detection of an incompatible network, prior to its de-activation, and refuse to start-up again until a software reload has been executed. In this case, the equipment/FRU may also maintain a report of the analysis leading to de-activation, in order to debug possibly false de-activations for the concerned network.

Furthermore, it is to be noted that the equipment or FRU does not have to decide already during initialization whether it can remain operational in the network environment or not. As mentioned above, it is acceptable that the extraction and analysis of the network identification or signature take some time, whereby the non-compliant FRUs and/or equipment can be switched off at any time when a non-compliance is detected between the detected network environment identity and a stored list of one or reference network identifiers.

Also, a de-activation time that is random in case of non-compliance, as a consequence of the above analysis techniques, will even more discourage deployment of illegally acquired equipment or FRU in the networks, as frequent yet random failures after activation are even worse than well timed failures particularly for the Quality of Experience (QoE) of the network service customers.

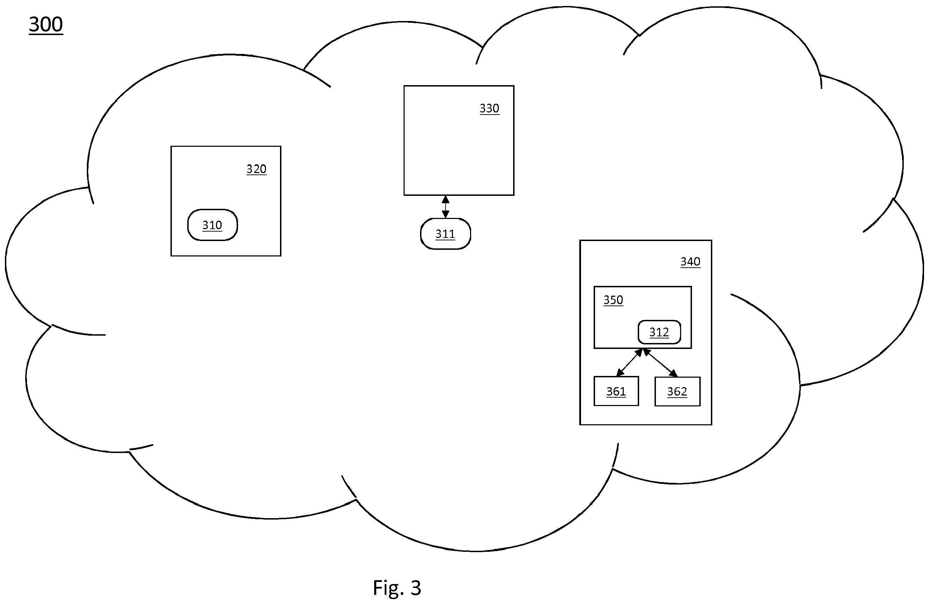

Fig. 3 shows an exemplary network system employing the principle of the present disclosure. In particular, Fig. 3 shows a network system 300, in which a number of network components are deployed in the network environment (not shown in Fig. 3) of the system 300. For example, network components 320, 330 and 340 may be three network equipment of different types (e.g., fixed network equipment or mobile network equipment). In particular, in the example shown in Fig. 3, the network component 340 is a chassis (or shelf) which a controller card 350 is plugged into. Furthermore, the controller card 350 controls the operation of two line cards 361 and 362. In this case, the line card may be referred to as an FRU. In some other cases, the FRU may refer to a fan (not shown in Fig. 3) that is plugged into the network equipment 320.

The network system may also comprise one or more control units 310, 311 and 312 for controlling the operations of the respective network components. In the example shown in Fig. 3, two control units 310 and 312 are comprised within the respective network components 320 and 350 (e.g., the control units being embodied as processors), while the other control unit 311 is a standalone unit deployed in the network environment.

During operation, the control units 310 and 311 may be configured monitor the network traffic for obtaining a network environment identifier. On the other hand, the control unit 312 may be configured to monitor its immediate environment to obtain a network environment identifier. In the present example, the immediate environment may refer to the line card 361 which it controls, or the chassis 340 which it is plugged into. Consequently, the network environment identifier detected from the immediate environment may be the unique identity of the line card 361 which it controls, or the unique identify of the chassis 340 which it is plugged into.

Once the network environment identifier is obtained, the control unit 310, 311 and 312 may be configured to compare it with a reference network environment identifier stored in a non-volatile memory (not shown in Fig. 3) and decide whether the detected network environment identifier corresponds with the stored reference network environment identifier or not.

In case it is determined that the detected network environment identifier does not correspond with the stored reference network environment identifier, the control unit 310, 311 or 312 may be configured to deny the operation of the corresponding network component. As an example, if the control unit 311 detects that the network equipment 330 is not admissible in the system 300, the control unit may be configured to suspend or shut-down the network equipment 330, until for example a manual power-up intervention or a software reload process. As another example, the control unit 312 of the controller card may determine that the line card 361 is not legitimate to be deployed, the control unit 312 may be configured to stop operation of the line card 361.

Taking the network components 340 (the chassis) including the network component 350 (the controller card) and the network components 361 and 362 (the line cards) as a more generic example, all these components have their own unique identities (e.g., serial numbers or other identities as mentioned above) that may be stored in a memory (e.g., in a reset safe area built into the memory).

During operations, the line card (361 or 362) may fetch from the controller card 350 the identity of the chassis 340 in which it was provisioned first, and/or the identity of the controller card 350 which was used to provision it in the chassis, and store the fetched information into the memory. Similarly, the control card 350 may fetch the identity of the chassis 340 in which it was plugged in first and store this information into the memory.

Then, every time any one of the line cards 361, 362 and the controller card 350 is plugged out and put back in, or powered-down and -up while staying in the chassis, it can query for the identity from the peer component(s) (e.g., the controller card and/or the chassis), and verify the actually queried identity with the respective stored information. If the obtained information does not match with the stored identity which it was provisioned first, it will refuse to come online and thus render it useless (e.g., when plugged into a new chassis).

Further, the identity information stored in the memory can be deleted when the cards are properly un-provisioned from a chassis/shelf for movement to another chassis/shelf. Such procedure allows for the valid owner (e.g., the legitimate operation and/or vendor) to have the ability to move the cards within his network, if needed.

Overall, the exemplary approach ensures that the cards will come online only in the chassis where they were properly provisioned at first. Consequently, stealing the cards from a chassis and putting them in another chassis will render them useless so that thefts could be deterred.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. A method for operating a network component deployed in a network environment, wherein the method comprises steps of:
obtaining a network environment identifier for the network environment;
comparing the obtained network environment identifier with a reference network environment identifier stored in a non-volatile storage of the network component; and
denying operation of the network component in the network environment if the obtained network environment identifier does not correspond with the reference network environment identifier.

2. The method according to claim 1, wherein the step of obtaining the network environment identifier is performed by the network component itself or by another network component which manages said deployed network component in a same network node assembly, independently from other network components outside the network node assembly.

3. The method according to claim 1 or 2, wherein the reference network environment identifier is pre-configured in the network component at manufacturing time or stored in non-volatile storage at the first initialization process of the network component.

4. The method according to any one of claims 1 to 3, wherein a same reference network environment identifier is used for all network components deployed in the network environment.

5. The method according to any one of claims 1 to 3, wherein the reference network environment identifier is individually unique for each network component deployed in the network environment.

6. The method according to claim 4 or 5, wherein the reference network environment identifier is further encrypted.

7. The method according to claim 6, wherein the encryption is performed using a unique identity of the network component and the unique identity comprises at least one of an Equipment Serial Number, ESN, a Communication Serial Number, CSN, a DHCP Unique Identifier, DUID, or an Initial Device Identifier, IDevID.

8. The method according to any one of claims 1 to 7, wherein the step of obtaining the network environment identifier comprises:
monitoring network traffic for determining the network environment identifier, wherein the network traffic comprises at least one of management traffic, relayed control traffic, and/or relayed subscriber traffic.

9. The method according to any one of claims 1 to 7, wherein the step of obtaining the network environment identifier comprises:
detecting an immediate environment of the network environment in which the network component is deployed, wherein the immediate environment comprises at least one of another peer network component which the network component is plugged into, plugged next to, which the network component is controlled by, and/or which the network component controls.

10. The method according to claim 8, wherein the obtained network environment identifier comprises one of an IEEE 802.3 Ethernet MAC address, an IETF IPv4/v6 address or part thereof, or an identifier related to an operator's network supporting infrastructure.

11. The method according to claim 9, wherein the obtained network environment identifier comprises a unique identifier of the immediate environment.

12. The method according to any one of claims 1 to 11, wherein the step of denying operation of the network component in the network environment is triggered at a random time after the detected non-correspondence.

13. The method according to any one of claims 1 to 11, wherein the method further comprises:
prior to the step of denying operation of the network component in the network environment, storing information about the detected non-correspondence in the network component; and
refusing the network component to start-up again, until a manual power-up intervention is executed.

14. A control unit for controlling a network component deployed in a network environment, wherein the control unit is configured to:
obtain a network environment identifier for the network environment;
compare the obtained network environment identifier with a reference network environment identifier stored in a non-volatile memory of the network component; and
cause suspension of operation of the network component in the network environment if the obtained network environment identifier does not correspond with the reference network environment identifier.

15. The control unit according to claim 14, wherein the control unit is comprised within the to-be-operated network component itself or is comprised within another network component or forms part of a standalone unit of the network environment.
